# EUROPEAN PATENT SPECIFICATION

(11) **EP 2 502 481 B1**
(45) Date of publication and mention of the grant of the patent: **13.02.2013**
(21) Application number: 11425070.7
(22) Date of filing: 23.03.2011
(51) Int. Cl.: A01D 34/00, G05D 1/02

(54) **Apparatus for cutting grass**
Mähvorrichtung
Tondeuse

(43) Date of publication of application: 26.09.2012
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 1 906 205
- US-A1- 2010 326 030

## Description

The present invention relates to an apparatus for cutting grass.

It is known that automatic lawn mowers are presently designed to operate within predetermined cutting areas. Lawn mowers are used for maintaining lawns, gardens and grassy areas in general in optimal conditions, i.e. maintaining the grass under a given height in a substantially homogeneous manner over the whole cutting area.

Often the cutting area is bounded by a perimetral wire or cable inside which an electric signal is propagated; the lawn mower, by detecting such an electric signal, is able to recognise its (internal/external) positioning relative to the cutting area and therefore adjust its movements accordingly.

In a first available solution in accordance with the known art, the electric signal in the perimetral cable is provided to have a single-frequency sine wave form. At the beginning of its operation, the lawn mower is synchronised with the management device, i.e. the device causing generation of said electric signal, and stores a reference representative of such a sinusoidal signal.

During its operation, the lawn mower through suitable sensor means detects the signal that is propagated in the perimetral cable and compares it with the previously stored reference.

If the two signals are concordant, the lawn mower "understands" that it is inside the cutting area; on the contrary, if the two signal are discordant, the lawn mower recognises that its position is external to the cutting area. In both cases, the obtained information is useful for adjusting the movements and/or cutting operations of the lawn mower itself.

The main drawback of this first configuration comes out if the energy consumption of the system is taken into account: in fact, in the perimetral cable the electric signal is substantially propagated continuously, thereby giving rise to a non negligible energy consumption.

A second known solution consists in using a current signal having at least two different harmonic components. During its operation, the lawn mower detects this signal, separates the two harmonics and as a function of said harmonics establishes whether it is at the inside or the outside of the cutting area.

In this case too the information is then used for controlling how the movement and/or cutting operations are to be carried out by the lawn mower.

The main drawback connected with this second solution consists in that it is a complex technique requiring the presence of complicated and expensive circuits on board the lawn mower.

A further solution, whereby the signal is converted into digital pulses in the receiver system of the lawn mower is known from EP-A-1 906 205.

The present invention aims at making available an apparatus for cutting grass in which the lawn mower can determine its (internal/external) positioning relative to the cutting area in a simple and reliable manner. Another aim of the present invention is to make available an apparatus for cutting grass in which the lawn mower can adjust its movements and cutting operations in a simple and reliable manner.

It is a further aim of the invention to provide an apparatus for cutting grass in which the lawn mower is able to operate in a correct and efficient manner and, at the same time, has a simple and cheap electronic structure.

The foregoing and still further aims are substantially achieved by an apparatus for cutting grass in accordance with the description thereof made in the appended claims.

Further features and advantages will become more apparent from the detailed description of a preferred but not exclusive embodiment of the invention.

This description will be provided hereinafter with reference to the accompanying drawings, given by way of non-limiting example, in which:
- Fig. 1 diagrammatically shows a perspective view of a lawn mower being part of the apparatus according to the present invention;
- Fig. 2 is a block diagram of an apparatus according to the invention;
- Figs. 4a-4f and 5 show some signals used in the apparatus in Fig. 1;
- Fig. 6 diagrammatically shows a system for cutting grass in which the apparatus of the invention can be employed.

With reference to the drawings, an apparatus for cutting grass according to the invention has been generally denoted by 100.

Apparatus 100 comprises a lawn mower 1, designed to operate at least inside one cutting area S, bounded by a perimetral cable 2.

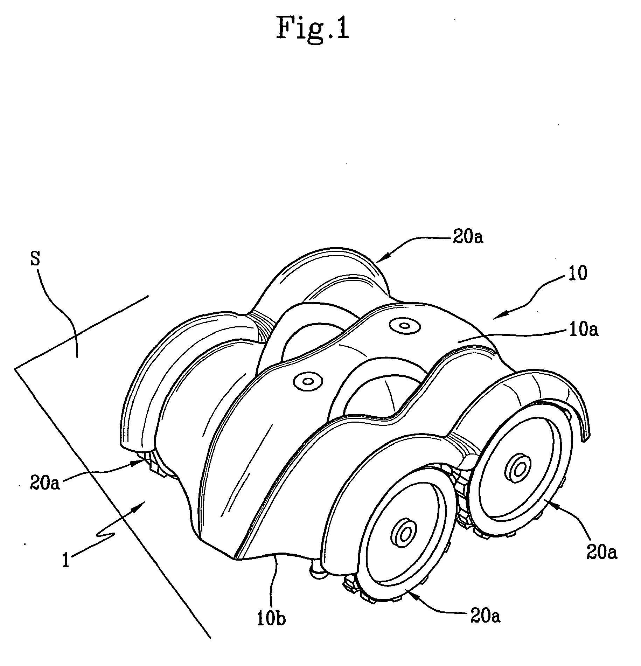

The lawn mower 1 (Fig. 1) first of all comprises a frame 10; the frame 10 may for example comprise an upper body 10a and a lower body 10b, preferably associated with each other in a removable manner. The upper body 10a and lower body 10b can be made of plastic material, for example.

The lawn mower 1 further comprises actuating means 20 mounted on frame 10 to move the lawn mower 1 relative to a work surface or cutting area S; the latter can be a lawn, a garden, a flowerbed, or generally any surface on which the lawn mower 1 has to operate.

The actuating means 20 preferably comprises a plurality of wheels 20a, mounted on frame 10, and one or more motors, designed to drive said wheels 20a in rotation. By way of example, the lawn mower 1 shown in the drawings is provided with four wheels 20a, suitably powered.

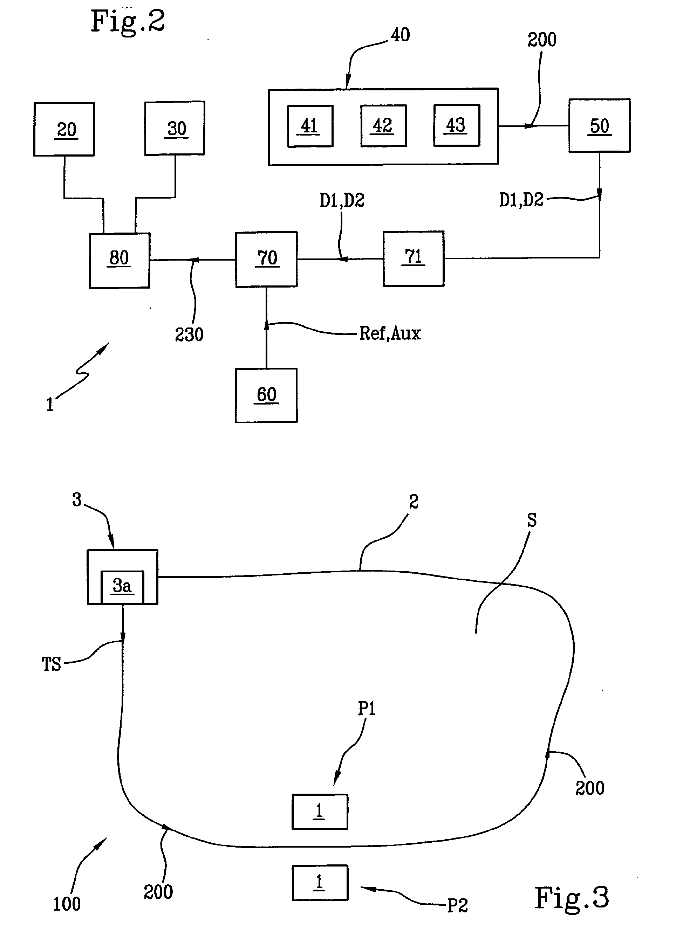

The lawn mower 1 further comprises one or more blades 30 (diagrammatically shown in Fig. 2), mounted on frame 10 for cutting the grass present on the work surface S. Advantageously blades 30 are moved by suitable motors housed within frame 10.

By way of example, said motors can be electric motors powered by a battery; the latter can be of the rechargeable type. Preferably, the battery recharge taking place at a fixed station or recharge base, is obtained by an electric coupling, in particular of the inductive type. Preferably said battery can also power a control unit (to be described in the following) and other electric/electronic devices provided on board the lawn mower 1.

Apparatus 100 further comprises a management device 3 (Fig. 3) associated with said perimetral cable 2. The management device 3 is configured for outputting an electric signal 200 comprising a plurality of pulses 210 separated from each other. Each pulse is formed with a substantially periodical carrier signal at a main frequency f, which is phase-modulated with phase displacements equal to k*180°, k being a positive integer.

In other words, assuming that a pulse 210 is formed with a plurality of half waves, a given half wave will be able to be 180° out of phase for example, and the following one to be further 180° out of phase (for a total amount of 360°, thus practically being again devoid of phase displacement relative to the starting reference of the carrier signal). The same can then be valid for the phase displacements of the following half waves.

The management device 3 is connected to cable 2 in such a manner that the electric signal 200 is propagated in cable 2. Preferably the main frequency f is included between 5 KHz and 10 KHz. By way of example, this main frequency f can be substantially equal to about 8 KHz. Preferably, pulses 210 each have a time duration included between 1 ms and 10 ms, preferably between 3 ms and 6 ms. By way of example, the time duration of each pulse 210 can substantially be equal to about 4.5 ms.

Preferably pulses 210 are separated by intervals of a time duration included between 30 ms and 120 ms, preferably in the range of 50 ms to 100 ms.

By way of example, each pulse 210 can be formed of a plurality of half waves (sinusoidal or square half waves) having either a positive or negative sign, depending on the carried out modulation. Preferably, all pulses are substantially equal to each other. Advantageously, before causing propagation of the electric signal 200 in cable 2, the management module 3 performs a current-limiting step so as to suitably define the width and/or duration of the above mentioned half waves.

Advantageously, the lawn mower 1 also comprises sensor means 40 for detection of the electric signal 200. In this way, when the lawn mower 1 is in the vicinity of the perimetral cable 2 it is able to determine, as better clarified in the following, whether it is inside or outside the cutting area S.

In an embodiment, the sensor means 40 can comprise an inductive element 41, e.g. a coil, and a current reader 42. Preferably, also provided is a current amplifier 43 aiming at allowing correct reading of the detected signal.

The lawn mower 1 further comprises an operating module 50 configured for performing some operations for the purpose of processing and interpreting the information supplied by the detected electric signal 200 in an appropriate manner.

In particular, the operating module 50 is configured for filtering at least one first pulse 211 in the detected electric signal 200, in a main frequency band B defining a neighbourhood of the main frequency f. In this way, the operating module 50 obtains a corresponding filtered first pulse 211a. By way of example, the main frequency band B can be included between 7 KHz and 9 KHz. In particular, the main frequency band B can be further narrowed on the main frequency f, until becoming a band substantially exclusively consisting of the main frequency f itself. The first filtered pulse 211a incorporates data at the main frequency f, present in the first pulse 211. This means that the informative contribution that is filtered in the first pulse 211 is that at the main frequency f. In this manner, other harmonic contributions are not required to be used or analysed. The operating module 50 is also configured for identifying one or more data D1 in said first filtered pulse 211a as a function of possible phase displacements present therein. Practically, the operating module 50 identifies the phase displacements present within the filtered pulse 211a and converts them into a 0 and 1 sequence.

By way of example, the operating module 50 in the first filtered pulse 211a identifies leading edges and trailing edges. These leading/trailing edges in fact represent the course of the first pulse 210 determined by the phase displacements present therein.

Note that the above mentioned filtering operation causes the detected data D1 to be independent of the type of carrier used (sinusoidal, square carrier, etc.).

The lawn mower 1 further comprises a memory 60 in which main reference data, Ref, are stored. Preferably, the main reference data Ref are representative of the fact that the lawn mower 1 is within the cutting area S. Preferably, the main reference data Ref comprise sequences of leading and trailing edges.

The lawn mower 1 further comprises a main comparison module 70 associated with the operating module 50 and memory 60 for comparing the data D1 identified in the first filtered pulse 211a and the main reference data Ref contained in memory 60. As a function of this comparison, the main comparison module 70 generates a corresponding notification signal 230 representative of the fact that the lawn mower 1 is positioned at the inside or the outside of the cutting area S.

In fact, as said, the main reference data Ref are representative of the fact that the lawn mower 1 is positioned within the cutting area S. In other words, the main reference data Ref are those data that are "expected" to be received by the main comparison module 70 from the operating module 60 when the lawn mower 1 is within the cutting area S. Therefore, if the main comparison module 70 finds a substantial equality between data D1 and the main reference data Ref, then the notification signal 230 will be representative of the fact that the lawn mower 1 is inside the cutting area S (position P1 in Figure 3).

On the contrary, if the main comparison module 70 finds a substantial inequality between data D1 and the main reference data Ref, then the notification signal 230 will be representative of the fact that the lawn mower 1 is outside the cutting area S (position P2 in Fig. 3). This is due to the fact that positioning of the lawn mower 1 inside or outside the cutting area S affects the phase of the electric signal 200 as detected by the lawn mower itself in an important manner.

The lawn mower 1 further comprises a control unit 80 connected to the main comparison module 70 for operation of the actuating means 20 as a function of the notification signal 230.

The control unit 80 therefore has the task of directing the movements of the lawn mower 1, based on the fact that the latter is inside or outside the cutting area S. In particular, if the lawn mower 1 is outside the cutting area S, the control unit 80 will cause operation of the actuating means 20 (preferably consisting, as said, by wheels 20a and related motors) in such a manner as to enable the lawn mower 1 to come back to the inside of the cutting area S.

In an embodiment, the control unit 80 can also operatively act on the aforesaid blades 30, so as to also adjust operation of the latter depending on the lawn mower 1 position. For instance, if the lawn mower 1 is outside the cutting area S, blades 30 can be deactivated, so as to reduce waste of electric energy and prevent possible faults to the blades themselves. As said, pulses 210 are substantially all equal to each other. In other words, the management device 3 causes the same information to be continuously propagated within cable 2, being understood that the above described pauses between a pulse and the following one are present. This enables a control technique to be implemented in which reading of the electric signal 200 by the lawn mower 1 is made more reliable, so that the lawn mower 1 movements will follow the actual requirements dictated by the situation in a more reliable manner.

In greater detail, the operating module 50 is preferably configured for filtering in the electric signal 200, a second pulse 212 too in said main frequency band B. The second pulse 212 for instance can follow the first pulse 211 in time. After this further filtering operation, the operating module 50 obtains a corresponding second filtered pulse 212a.

Furthermore, the operating module 50 identifies data D2 in the second filtered pulse 212a as a function of the phase displacements present in such a pulse. Practically, the operating module 50 performs the different phases already carried out with reference to the first pulse 211 at least one second time, so as to detect the same information (the information contained in the first pulse 211 and that contained in the second pulse 212) at least twice.

Preferably, the lawn mower 1 comprises an auxiliary comparison module 71 entrusted with the task of comparing data D1 identified in the first filtered pulse 211a with data D1 identified in the second filtered pulse 212a. The auxiliary comparison module 71 then sends these data D1, D2 to the main comparison module 70 if these data are substantially the same. In other words, data are sent to the main comparison module 70 only if said data have been detected at least twice in an identical manner (through the first pulse 211 and the second pulse 212).

Preferably, the main comparison module 70 is such configured that it does not generate said notification signal 230 if it does not receive data from the auxiliary comparison module 71. This means that the comparison module 70 does not enable the control unit 80 to act on the actuating means 20 (i.e. it does not send the notification signal 230 to the control unit 80), if it does not receive from the auxiliary comparison module 71, data D1, D2 that have been submitted to a dual check in terms of reliability of reading.

In order to further clarify operation of apparatus 100 in accordance with the invention, a practical example for implementation of the apparatus itself is given hereinafter.

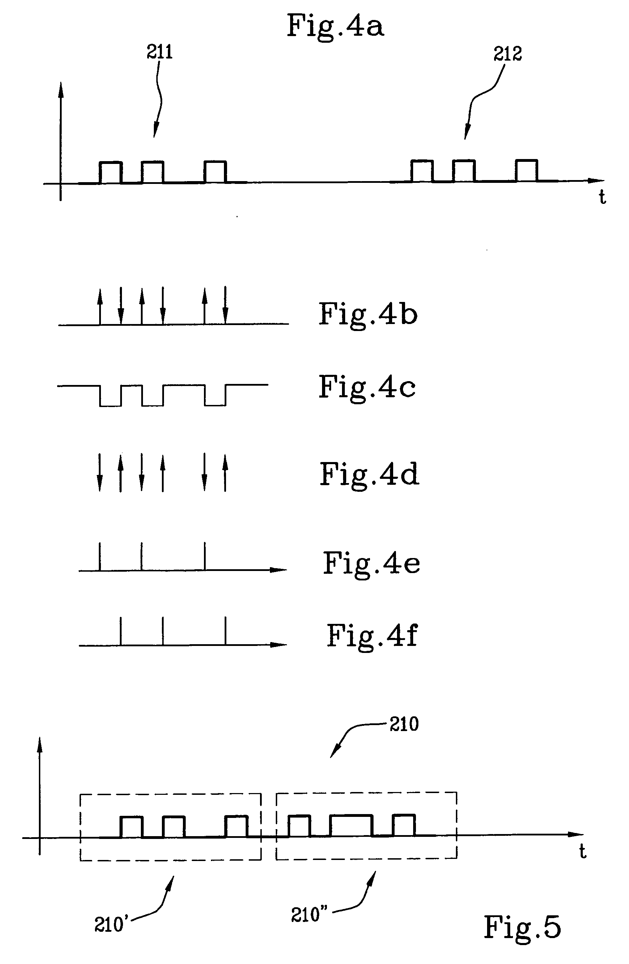

The first pulse 211 is made up, in the order, of a starting alternation of positive and negative (two positive and two negative) half waves, as diagrammatically shown in Fig. 4a, then of two consecutive positive half waves and finally of a negative half wave. The foregoing is a structure example for the first pulse 211 as it is generated by the management device 3.

Correspondingly, in memory 60 the main reference data Ref consist of the sequence of leading and trailing edges represented in Fig. 4b. As it is possible to see, the main reference data Ref exactly represent the course of the first pulse 211.

If the lawn mower 1 is within the cutting area S (position P1 in Fig. 3), the sensor means 40 exactly detects the wave form of the first pulse 211 as described above. Therefore data D1, on this occasion, will be substantially identical with the main reference data Ref.

On the contrary, if the lawn mower 1 is outside the cutting are S (position P2 in Fig. 3) data D1 will be substantially different from the main reference data Ref. In particular, data D1 will be 180° out of phase relative to the main reference data Ref, as diagrammatically shown in Fig. 4c-4d.

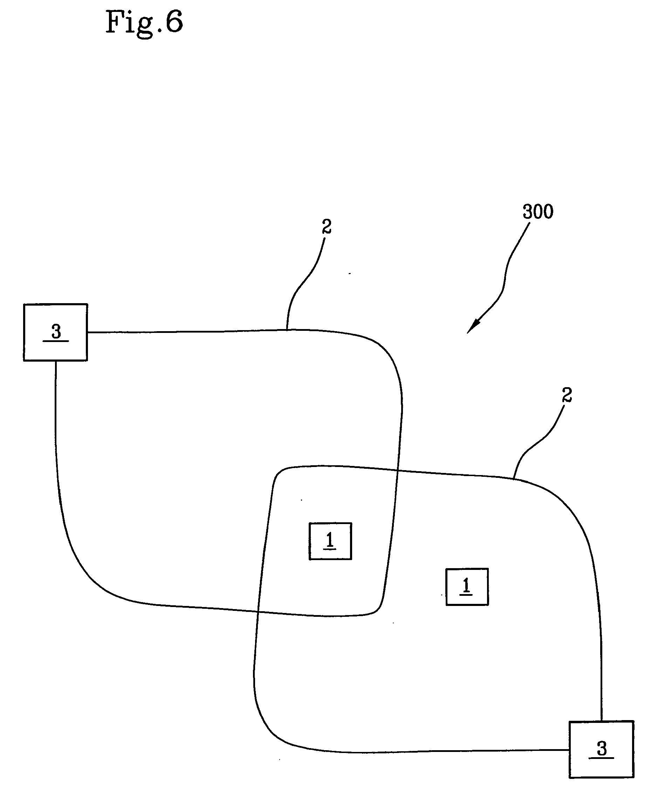

In an embodiment, the trailing edges and leading edges can also be separated (Figs. 4e and 4f, respectively) for performing the operations herein described. Application of apparatus 100 according to the present invention also advantageously takes place where different apparatuses similar to each other have to operate in the vicinity of each other. In fact, it is provided that a system 300 (Fig. 6) comprising at least two similar apparatuses of the same type as the above described apparatus 100 might be accomplished. Each apparatus will comprise a lawn mower, a perimetral cable and a management device.

In this context, the information coded within the electric signal that is propagated in each perimetral cable can make the different apparatuses not to interfere with each other. In other words, it is possible to make each lawn mower recognise a perimetral cable confining the area in which such a lawn mower is called to operate and to determine its position relative to such a cable, without errors and malfunctions being caused by the electric signals propagated in the electric cables of other near apparatuses.

This aspect can be particularly advantageous when crossing of two perimetral cables occurs, as diagrammatically shown in Fig. 6. To this aim, the management device 3 generates the electric signal 200 in such a manner that each pulse 210, in addition to a given number of half waves dedicated to determining the (inside/outside) position of the lawn mower 1, may also comprise other half waves representative of an identification code of the apparatus.

In other words, each pulse 210 may comprise a first location portion 210' and a second identification portion 210'' (Fig. 5). The first location portion 210' is used by the lawn mower 1 so that it can understand whether it is inside or outside the cutting area S. The second identification portion 210'' enables the lawn mower 1 to understand whether the prior location portion actually relates to the perimetral cable 2 confining the cutting area S in which the lawn mower 1 is called to operate. Preferably the first location portion 210' precedes the second identification portion 210'' in time.

Correspondingly, memory 60 also contains auxiliary reference data Aux identifying the cable confining a work area in which the lawn mower 1 has to operate. The main comparison module 70 is therefore suitably configured for comparing the second identification portion 210'' with the auxiliary reference data Aux. Advantageously, the notification signal 230 is generated also as a function of the last-mentioned comparison. In greater detail:
- whether there is a correspondence both between the first location portion 210', the main reference data Ref being substantially equal to each other, and the second identification portion 210'', the auxiliary reference data Aux being substantially equal to each other, then the notification signal 230 is generated and sent to the control unit 80; the notification signal 230 in this case is representative of the fact that the lawn mower 1 is inside the cutting area over which said lawn mower is actually expected to operate;
- whether the first location portion 210' has a 180° phase displacement relative to the main reference data Ref and the second identification portion 210" has a 180° phase displacement relative to the auxiliary reference data Aux, then the notification signal 230 is generated and sent to the control unit 80; the notification signal 230 in this case is representative of the fact that the lawn mower 1 is outside the cutting area over which said lawn mower is actually expected to operate, but in the vicinity thereof;
- in all other cases the notification signal 230 is not generated and sent, since the information received from the lawn mower 1 does not come from the cutting area S in which said lawn mower 1 is called to operated.

It should be noted that also in the system above described, in which use of several apparatuses for grass cutting is provided, it may be advantageously employed the above described technique involving a dual check.

It should be also noted that the above described different operating elements (operating module 50, main comparison module 70, control unit 80, auxiliary comparison module 71) have been shown and illustrated separately for the only purpose of making operation of apparatus 100, and above all of lawn mower 1, as clear as possible. These operating elements can be in actual fact also obtained with a single electronic device, such as a microprocessor, suitably programmed for performing the operations herein described and claimed. The invention achieves important advantages.

First of all the lawn mower being part of the apparatus of the invention is able to determine its (inside/outside) positioning relative to the cutting area in a simple and reliable manner.

Another advantage consists in that the lawn mower can adjust its movements and cutting operations in a simple and reliable manner.

A further advantage is represented by the fact that the lawn mower is able to operate in a correct and efficient manner while at the same time having a simple and cheap electronic structure.

## Claims

1. An apparatus for cutting grass, comprising:
- a lawn mower (1) provided with: actuating means (20) for movement of said lawn mower (1) at least inside one cutting area (S); one or more blades (30) for grass cutting in said cutting area (S);
- an electric cable (2) confining said cutting area (S);
- a management device (3) associated with said cable (2) and configured for outputting an electric signal (200) comprising a plurality of pulses (210) separated from each other, each pulse (210) being formed with a portion (P) of a substantially periodic carrier signal at a main frequency (f), which is phase-modulated with phase displacements equal to k*180°, k being a positive integer,
said management device (3) being connected to said cable (2) to make said electric signal (200) propagate in said cable (2);
said lawn mower (1) being further provided with:
- sensor means (40) for detecting said electric signal (200);
- an operating module (50) configured for:
• filtering in said electric signal (200), at least one first pulse (211) in a main frequency band (B) defining a neighbourhood of said main frequency (f), thus obtaining a corresponding first filtered pulse (211a) incorporating the main frequency data (f) present in said first pulse (211);
• identifying one or more data (D1) in said first filtered pulse (211a) as a function of said phase displacements;
- a memory (60) in which main reference data (Ref) are contained;
- a main comparison module (70) associated with said operating module (50) and said memory (60) for comparing data (D1) identified in said first filtered pulse (211a) and said main reference data (Ref), and generating a corresponding notification signal (230) representative of the fact that said lawn mower (1) is positioned inside or outside said cutting area (S);
- a control unit (80) connected to said main comparison module (70) for operating said actuating means (20) as a function of said notification signal (230).

2. An apparatus as claimed in claim 1, wherein said operating module (50) identifies leading edges and trailing edges in said first filtered pulse (211a), said main reference data (Ref) comprising sequences of leading edges and trailing edges.

3. An apparatus as claimed in anyone of the preceding claims, wherein said main reference data (Ref) are representative of the fact that said lawn mower (1) is positioned inside said cutting area (S).

4. An apparatus as claimed in anyone of the preceding claims, wherein said sensor means (40) comprises an inductive element (41) and a current reader (42).

5. An apparatus as claimed in anyone of the preceding claims, wherein:
- said operating module (50) is configured for:
• filtering in said electric signal (200), at least one second pulse (212) in said main frequency band (B), thus obtaining a corresponding second filtered pulse (212a);
• identifying data (D2) in said second filtered pulse (212a) as a function of said phase displacements;
said lawn mower (1) further comprises an auxiliary comparison module (71) configured for:
• comparing data (D1) identified in said first filtered pulse (211a) and data (D2) identified in said second filtered pulse (212a) with each other;
• sending said data (D1, D2) to said main comparison module (70) when said data (D1, D2) are substantially identical with each other;
said main comparison module (70) being configured for generating said notification signal (230) when it does not received data from said auxiliary comparison module (71).

6. An apparatus as claimed in anyone of the preceding claims, wherein each of said pulses (210) comprises a first location portion (210') and a second identification portion (210'') of said cable (2),
said memory (60) further comprising auxiliary reference data (Aux) identifying a cable confining a work area in which said lawn mower (1) has to operate,
said main comparison module (70) being configured for comparing said second identification portion (210") with said auxiliary reference data (Aux),
said notification signal (230) being also generated as a function of the last-mentioned comparison.

7. An apparatus as claimed in anyone of the preceding claims, wherein said main frequency (f) is included between 5KHz and 10 KHz.

8. An apparatus as claimed in anyone of the preceding claims, wherein each of said pulses (210) has a time duration included between 1 ms and 10 ms, preferably between 3 ms and 6 ms.

9. An apparatus as claimed in anyone of the preceding claims, wherein said pulses (210) are separated by intervals having a time duration included between 30 ms and 120 ms, preferably between 50 ms and 100 ms.

## Patentansprüche

1. Vorrichtung zum Schneiden von Gras, umfassend:
- einen Rasenmäher (1), versehen mit:
Betätigungsmitteln (20) für die Bewegung des Rasenmähers (1) mindestens in einem Schneidbereich (S),
eines oder mehrere Messer (30) zum Schneiden von Gras in diesem Schneidbereich (S);
- ein elektrisches Kabel (2), das den Schneidbereich (S) abgrenzt;
- eine Handhabungsvorrichtung (3), verbunden mit dem Kabel (2) und eingerichtet zur Ausgabe eines elektrischen Signals (200), umfassend eine Vielzahl von Impulsen (210), die voneinander getrennt sind, wobei jeder Impuls (210) mit einem Abschnitt (P) eines im Wesentlichen periodischen Trägersignals bei einer Hauptfrequenz (f) geformt wird, die phasenmoduliert ist mit Phasenverschiebungen gleich k*180°, wobei k eine positive ganze Zahl ist,
wobei diese Handhabungsvorrichtung (3) mit dem Kabel (2) verbunden ist, um dafür zu sorgen, dass das elektrische Signal (200) im Kabel (2) verbreitet wird; wobei der Rasenmäher (1) außerdem versehen ist mit:
- Sensormitteln (40) zum Erfassen des elektrischen Signals (200);
- einem Betriebsmodul (50), eingerichtet zum:
• Filtern in diesem elektrischen Signal (200) von mindestens einem ersten Impuls (211) in einem Hauptfrequenzband (B), definierend eine Umgebung der Hauptfrequenz (f), wodurch ein entsprechender erster gefilterter Impuls (211a) erhalten wird, der die im ersten Impuls (211) enthaltenen Hauptfrequenzdaten (f) enthält;
• Identifizieren eines oder mehrerer Datenwerte (D1) im ersten gefilterten Impuls (211a) als eine Funktion der Phasenverschiebungen;
- einem Speicher (60), in dem die Hauptreferenzdaten (Ref) enthalten sind;
- einem Hauptvergleichsmodul (70), verbunden mit dem Betriebsmodul (50) und dem Speicher (60), zum Vergleichen der Daten (D1), identifiziert im ersten gefilterten Impuls (211a), und der Hauptreferenzdaten (Ref) und zum Generieren eines entsprechenden Meldesignals (230), repräsentativ für die Tatsache, dass der Rasenmäher (1) innerhalb oder außerhalb des Schneidbereichs (S) positioniert ist;
- einer Steuereinheit (80), angeschlossen an das Hauptvergleichsmodul (70), für den Betrieb der Betätigungsmittel (20) als eine Funktion des Meldesignals (230).

2. Vorrichtung nach Anspruch 1, wobei das Betriebsmodul (50) Vorderflanken und Rückflanken im ersten gefilterten Impuls (211a) identifiziert, wobei die Hauptreferenzdaten (Ref) Sequenzen von Vorderflanken und Rückflanken umfassen.

3. Vorrichtung nach einem der vorhergehenden Ansprüche, wobei die Hauptreferenzdaten (Ref) repräsentativ für die Tatsache sind, dass der Rasenmäher (1) innerhalb des Schneidbereichs (S) positioniert ist.

4. Vorrichtung nach einem der vorhergehenden Ansprüche, wobei die Sensormittel (40) ein induktives Element (41) und einen Stromleser (42) umfassen.

5. Vorrichtung nach einem der vorhergehenden Ansprüche, wobei:
- das Betriebsmodul (50) eingerichtet ist, um:
• im elektrischen Signal (200) mindestens einen zweiten Impuls (212) im Hauptfrequenzband (B) zu filtern, wodurch ein entsprechender zweiter gefilterter Impuls (212a) erhalten wird;
• einen oder mehrere Datenwerte (D2) im zweiten gefilterten Impuls (212a) als eine Funktion der Phasenverschiebungen zu identifizieren;
der Rasenmäher (1) umfasst zudem ein Hilfsvergleichsmodul (71), eingerichtet um:
• Daten (D1), die im ersten gefilterten Impuls (211a) identifiziert wurden, und Daten (D2), die im zweiten gefilterten Impuls (212a) identifiziert wurden, miteinander zu vergleichen;
• diese Daten (D1, D2) an das Hauptvergleichsmodul (70) zu übermitteln, wenn diese Daten (D1, D2) im Wesentlichen miteinander identisch sind;
wobei das Hauptvergleichsmodul (70) eingerichtet ist, um das Meldesignal (230) zu generieren, wenn es keine Daten vom Hilfsvergleichsmodul (71) empfängt.

6. Vorrichtung nach einem der vorhergehenden Ansprüche, wobei jeder der Impulse (210) einen ersten Ortungsabschnitt (210') und einen zweiten Identifizierungsabschnitt (210") des Kabels (2) umfasst und der Speicher (60) zudem Hilfsreferenzdaten (Aux) umfasst, die ein Kabel identifizieren, das einen Arbeitsbereich abgrenzt, in dem der Rasenmäher (1) zu arbeiten hat,
wobei das Hauptvergleichsmodul (70) eingerichtet ist, um den zweiten Identifizierungsabschnitt (210") mit den Hilfsreferenzdaten (Aux) zu vergleichen,
wobei das Meldesignal (230) auch als eine Funktion des letztgenannten Vergleichs generiert wird.

7. Vorrichtung nach einem der vorhergehenden Ansprüche, wobei die Hauptfrequenz (f) zwischen 5 kHz und 10 kHz enthalten ist.

8. Vorrichtung nach einem der vorhergehenden Ansprüche, wobei jeder der Impulse (210) eine zeitliche Dauer zwischen 1 ms und 10 ms, vorzugsweise zwischen 3 ms und 6 ms, aufweist.

9. Vorrichtung nach einem der vorhergehenden Ansprüche, wobei diese Impulse (210) durch Intervalle getrennt sind, die eine zeitliche Dauer zwischen 30 ms und 120 ms, vorzugsweise zwischen 50 ms und 100 ms, aufweisen.

## Revendications

1. Appareil servant à couper l'herbe, comprenant :
- une tondeuse à gazon (1) équipée : de moyens d'actionnement (20) assurant le mouvement de ladite tondeuse à gazon (1) au moins à l'intérieur d'une zone de coupe (S) ; d'une ou plusieurs lames (30) pour la coupe de l'herbe dans ladite zone de coupe (S) ;
- un câble électrique (2) délimitant ladite zone de coupe (s) ;
- un dispositif de gestion (3) associé au dit câble (2) et configuré pour produire un signal électrique (200) comprenant une pluralité d'impulsions (210) séparées les unes des autres, chaque impulsion (210) étant formée d'une partie (P) d'un signal porteur substantiellement périodique à une fréquence principale (f) qui est modulée en phase avec des déphasages égaux à k*180°, k étant un entier positif,
ledit dispositif de gestion (3) étant relié au dit câble (2) pour propager ledit signal électrique (200) dans ledit câble (2) ;
ladite tondeuse à gazon (1) étant de plus équipée :
- de moyens de détection (40) afin de détecter ledit signal électrique (200) ;
- d'un module de fonctionnement (50) configuré pour :
• filtrer dans ledit signal électrique (200) au moins une première impulsion (211) sur une bande de fréquence principale (B) définissant un voisinage de ladite fréquence principale (f), obtenant ainsi une première impulsion filtrée correspondante (211a) incorporant les données de fréquence principales (f) présentes dans ladite première impulsion (211) ;
• identifier une ou plusieurs données (D1) dans ladite première impulsion filtrée (211a) en fonction desdits déphasages ;
- une mémoire (60) dans laquelle les données de référence principales (Ref) sont stockées ;
- un module de comparaison principal (70) associé au dit module de fonctionnement (50) et à ladite mémoire (60) pour comparer les données (D1) identifiées dans ladite première impulsion filtrée (211a) ainsi que les données de référence principales (Ref), et générant un signal de notification correspondant (230) représentatif du fait que ladite tondeuse à gazon (1) est positionnée à l'intérieur ou à l'extérieur de ladite zone de coupe (S) ;
- une unité de commande (80) connectée au dit module de comparaison principal (70) pour faire fonctionner lesdits moyens d'actionnement (20) en fonction dudit signal de notification (230).

2. Appareil selon la revendication 1, dans lequel ledit module de fonctionnement (50) identifie les fronts montants et les fronts descendants dans ladite première impulsion filtrée (211a), lesdites données de référence principales (Ref) comprenant des séquences de fronts montants et de fronts descendants.

3. Appareil selon l'une quelconque des revendications précédentes, dans lequel lesdites données de référence principales (Ref) sont représentatives du fait que ladite tondeuse à gazon (1) est positionnée à l'intérieur de ladite zone de coupe (S).

4. Appareil selon l'une quelconque des revendications précédentes, dans lequel lesdits moyens de détection (40) comprennent un élément inductif (41) et un lecteur actuel (42).

5. Appareil selon l'une quelconque des revendications précédentes, dans lequel :
- ledit module de fonctionnement (50) est configuré pour :
• filtrer dans ledit signal électrique (200), au moins une seconde impulsion (212) sur ladite bande de fréquence principale (B), obtenant ainsi une seconde impulsion filtrée correspondante (212a) ;
• identifier les données (D2) dans ladite seconde impulsion filtrée (211a) en fonction desdits déphasages ;
ladite tondeuse à gazon (1) comprend de plus un module de comparaison auxiliaire (71) configuré pour :
• comparer les données (D1) identifiées dans ladite première impulsion filtrée (211a) et les données (D2) identifiées dans la seconde impulsion filtrée (212a) les unes avec les autres ;
• envoyer lesdites données (D1, D2) au dit module de comparaison principal (70) lorsque les données (D1, D2) sont substantiellement identiques les unes aux autres ; ledit module de comparaison principal (70) étant configuré pour générer ledit signal de notification (230) lorsqu'il n'a pas reçu de données en provenance dudit module de comparaison auxiliaire (71).

6. Appareil selon l'une quelconque des revendications précédentes, dans lequel chacune desdites impulsions (210) comprend une première partie d'emplacement (210') et une seconde partie d'identification (210") dudit câble (2), ladite mémoire (60) comprenant de plus des données de référence auxiliaires (Aux) identifiant un câble délimitant une zone d'intervention dans laquelle ladite tondeuse à gazon (1) doit intervenir,
ledit module de comparaison principal (70) étant configuré pour comparer ladite seconde partie d'identification (210 ") avec lesdites données de référence auxiliaires (Aux),
ledit signal de notification (230) étant aussi généré en fonction de la dernière comparaison mentionnée.

7. Appareil selon l'une quelconque des revendications précédentes, dans lequel ladite fréquence principale (f) est comprise entre 5 KHz et 10 KHz.

8. Appareil selon l'une quelconque des revendications précédentes, dans lequel chacune desdites impulsions (210) a une durée temporelle comprise entre 1 ms et 10 ms, préférablement entre 3 ms et 6 ms.

9. Appareil selon l'une quelconque des revendications précédentes, dans lequel lesdites impulsions (210) sont séparées par des intervalles ayant une durée temporelle comprise entre 30 ms et 120 ms, préférablement entre 50 ms et 100 ms.
